# EUROPEAN PATENT APPLICATION

(11) **EP 4 821 805 A1**
(43) Date of publication of application: **14.10.2026**
(21) Application number: 24903399.4
(22) Date of filing: 08.11.2024
(51) Int. Cl.: B63B 21/20, B63B 35/00, F03D 13/25

(54) **MOORING CABLE FOR TENSION-MOORED FLOATING BODY**

(30) Priority: 14.12.2023 JP 2023211321
(71) Applicant: Modec, Inc., Tokyo, 103-0027 (JP); KOBELCO WIRE COMPANY, LTD., Amagasaki-shi, Hyogo 660-0091 (JP)
(72) Inventor: WATANABE, Shigeru, Tokyo, 103-0027 (JP); MOCHIZUKI, Koji, Tokyo, 103-0027 (JP); XU, Qi, Houston, Texas 77094 (US); SAKAKI, Ippei, Amagasaki-shi, Hyogo 660-0091 (JP); SUZUKI, Minoru, Amagasaki-shi, Hyogo 660-0091 (JP)
(74) Representative: Lorenz Seidler Gossel Part. mbB
(86) International application number: PCT/JP2024/039819
(87) International publication number: WO 2025/126739

(57) **Abstract**

An object of the present invention is to provide a tension mooring line for a tension moored floating body that can equalize the tension generated in each tension mooring line without adjusting the length of each tension mooring line in each mooring bundle that supports the tension moored floating body, thereby preventing resonance with the off-shore wave period. This object is achieved by providing a mooring line for a tension moored floating body that connects between a connecting part 5b formed on the tension moored floating body and a seabed mooring part 9 fixed to the seabed 103, wherein tension is generated in the tension mooring line 7 by the buoyancy created due to the tension moored floating body 5 being connected by the tension mooring line 7, and the tension moored floating body 5 can be maintained in a tension moored state. The tension mooring line 7 is configured such that a low rigidity mooring line 7b, which has low tensile rigidity calculated by multiplying the Young's modulus of the line material by the cross-sectional area, and a high rigidity mooring line 7a, which has higher tensile rigidity than the low rigidity mooring line 7b, are connected via a connector.

## Description

### TECHNICAL FIELD

The present invention relates to a mooring line for a tension moored floating body, and more specifically, to a mooring line for a tension moored floating body that can equalize the tension generated in each mooring line without adjusting the length of the mooring lines in each mooring line bundle that supports mooring of the tension moored floating body, and that prevents resonance caused by the offshore wave period and the vibration period generated by wind turbines.

### CONVENTIONAL TECHNOLOGY

Conventionally, wind power generating equipment have mostly been installed on land. However, on land, there are obstacles that block the wind, such as mountains and buildings, which can easily cause turbulence and make wind speeds unstable.
Therefore, there have been proposals to install wind power generating equipment offshore. Off shore, there are no obstacles that block the wind, such as mountains or buildings, so turbulence is less likely to occur as compared to when on land, often resulting in stable and powerful winds. Therefore, installing wind power generating equipment offshore is thought to allow for more stable wind power generation than on land, and thus a large amount of electricity can be stably supplied.

When installing wind power generating equipment offshore, a structure is required to support the power generating equipment (wind turbine and generator). Such structures include bottom-fixed types, which are fixed to the seabed and extend offshore where wind turbines and generators are mounted, and floating types, which include a floating body moored to the seabed by mooring lines, on which the wind turbines and generators are mounted. The floating body type has the advantage of being able to be installed in deeper water than the bottom-fixed type. Deep sea regions are generally offshore regions, which is advantageous because these regions offer favorable wind conditions and allow for stable wind power generation. In particular, in Japan, the surrounding seas are deeper compared to other countries, so floating body types are advantageous.

Floating body type structures include catenary mooring structures, which use mooring lines to loosely connect the floating body to the seabed mooring equipment to maintain position.
Furthermore, as described in Patent Document 1, there are tension moored floating bodies which are tension leg platforms (TLPs) that forcibly lower the floating body using a mooring line to submerge a portion of the floating body, and use the buoyancy of the floating body to generate tension in the mooring line so as to maintain position.
A tension moored floating body maintains position by the tension of the mooring lines, and is thus easier to miniaturize as compared to catenary mooring systems. A tension moored floating body also offers advantages by providing high stability under the tension of the mooring lines.

### RELATED ART DOCUMENTS

### PATENT DOCUMENTS

Patent Document 1: JP 2023-124020 A

### SUMMARY OF THE INVENTION

### PROBLEM TO BE SOLVED BY THE INVENTION

A tension moored floating body is moored and supported by providing a plurality of sets of mooring line bundles, each containing a plurality of mooring lines, to each of the columns that compose the floating body. Each mooring line in each mooring bundle may be made of steel wire cable, which is made of a material that has high tensile rigidity and is resistant to stretching. The tension must be evenly distributed across each mooring line in each mooring bundle in a single column. If the tension is not uniform, some mooring lines will have no tension or only mild tension, while others will have excessively strong tension. This will cause uneven loading on each mooring line, which may damage the mooring lines or supporting structures, and also pose a problem with durability.
The length of each line must be adjusted using large winch equipment or the like in order to equalize the tension on each mooring line.
However, using large winch equipment increases the weight of the structures on the floating body, necessitating a larger floating body, which also leads to higher manufacturing costs.

One possible configuration that eliminates the need for equipment to adjust the length of the mooring line is to pre-measure the depth from the lower end of the mooring line to the top of the pile foundation that secures the mooring line to the seabed, and to pre-determine the required length of the mooring line from the mooring line attachment point on the floating body side to the top of the pile foundation. The mooring line is prepared on land to the required length, and the upper end is secured by the connecting part of the mooring line on the floating body side, while the lower end is secured by the top of the pile foundation.
However, the length of the mooring line includes various errors, such as measurement errors in measuring the depth to the top of the pile foundation, manufacturing errors in making the mooring line, and thermal expansion and contraction due to temperature changes. Therefore, by manufacturing the mooring lines to the required length in advance, the tension generated in each mooring line cannot be equalized.

On the other hand, mooring lines can be manufactured using materials with low tensile rigidity (flexibility), such as polyester rope, which allows the rope itself to stretch to absorb errors.
However, if mooring lines are made using materials with low rigidity, the spring constant k of the mooring lines will decrease, lowering the natural frequency of the system in the vertical and roll-pitch directions, which are characteristic of tension moored floating bodies. This may lead to vertical resonance due to the vibration period of the wind turbine and to roll-pitch resonance due to the wave frequency at sea.

If resonance occurs between the wave period at sea and the vibration period caused by the wind turbine, there is a risk of damage to the mooring lines and support structures, which can also lead to durability problems.

Therefore, an object of the present invention is to provide a mooring line for a tension moored floating body that can equalize the tension generated in each mooring line without adjusting the length of the mooring lines in each mooring line bundle that supports mooring of the tension moored floating body, and that prevents resonance due to the offshore wave period and the vibration period generated by wind turbines.
Furthermore, other problems of the present invention will become clear from the following description.

### MEANS FOR SOLVING THE PROBLEM

The above problems are solved by the following inventions.
1.
   A mooring line for a tension moored floating body that connects between a connecting part formed on a tension moored floating body supporting a wind power generating equipment offshore and a seabed mooring part fixed to the seabed, wherein
   the connecting part and the seabed mooring part are connected by the tension mooring line, and the buoyancy generated in the tension moored floating body generates tension in the tension mooring line, thereby enabling the tension moored floating body to be held in a tension moored state;
   the tension mooring line is connected via a connector between a low rigidity mooring line which has low tensile rigidity, calculated by multiplying the Young's modulus of elasticity of the line material by the cross-sectional area, and a high rigidity mooring line, which has higher tensile rigidity than the low rigidity mooring line;
   the line material of the low rigidity mooring line is a resin rope, and the line material of the high rigidity mooring line is a steel wire cable composed of a plurality of bundles of steel strands; and
   the tension mooring line is configured such that, when the tensile rigidity of the resin rope is set to 1, the tensile rigidity of the steel wire cable is 2 to 5 times the tensile rigidity of the resin rope.
2. A mooring line for a tension moored floating body that connects between a connecting part formed on a tension moored floating body supporting a wind power generating equipment offshore and a seabed mooring part fixed to the seabed, wherein
   the connecting part and the seabed mooring part are connected by the tension mooring line, and the buoyancy generated in the tension moored floating body generates tension in the tension mooring line, thereby enabling the tension moored floating body to be held in a tension moored state;
   the tension mooring line is connected via a connector between a low rigidity mooring line which has low tensile rigidity, and a high rigidity mooring line, which has higher tensile rigidity than the low rigidity mooring line;
   the low rigidity mooring line is a resin rope, and the high rigidity mooring line is a steel wire cable composed of a plurality of bundles of parallel steel strands; and
   50% or more of the total length of the tension mooring line is made of the high rigidity mooring line.
3. The mooring line for a tension moored floating body according to the aforementioned 1 or 2, wherein the resin rope is a polyester rope formed by preparing a plurality of sub-ropes made by twisting a plurality of polyester strands together, and bundling the plurality of sub-ropes in parallel.
4. The mooring line for a tension moored floating body according to the aforementioned 1 or 2, wherein the tension moored floating body contains at least three vertically extending hollow columnar columns arranged in a triangular shape on a plane, and each of the three columns is connected by three upper beams above the sea surface and three lower beams below the sea surface, wherein the wind power generating equipment is supported on one of the columns.

### EFFECT OF THE INVENTION

With the present invention, a portion of each mooring line in each mooring bundle that supports the tension moored floating body is made of a material with low tensile rigidity, so the tension generated in each mooring line can be made uniform by the elongation of the low rigidity portion without adjusting the length of each mooring line. This prevents damage to the mooring lines and supporting structures due to uneven loading in each mooring line, and achieves high durability.
Furthermore, with the present invention, the length of each mooring line does not need to be adjusted, so there is no need to use large winch equipment, the weight of the objects installed on the floating body can be reduced, the floating body itself can be made smaller, and manufacturing costs can be reduced.

Furthermore, with the present invention, the spring constant and natural frequency of the mooring line are larger and higher as compared to a case where only materials with low tensile rigidity are used for the entire mooring line, so resonance with the offshore wave period and the vibration period caused by the wind turbines is prevented, damage to the mooring line and support structure due to resonance is prevented, and high durability can be achieved.

### BRIEF DESCRIPTION OF THE DRAWINGS

FIG. 1 is a front view depicting offshore wind power generating equipment equipped with a tension moored floating body using a mooring line for a tension moored floating body according to an embodiment of the present invention;
FIG. 2 is a perspective view of the tension moored floating body depicted in

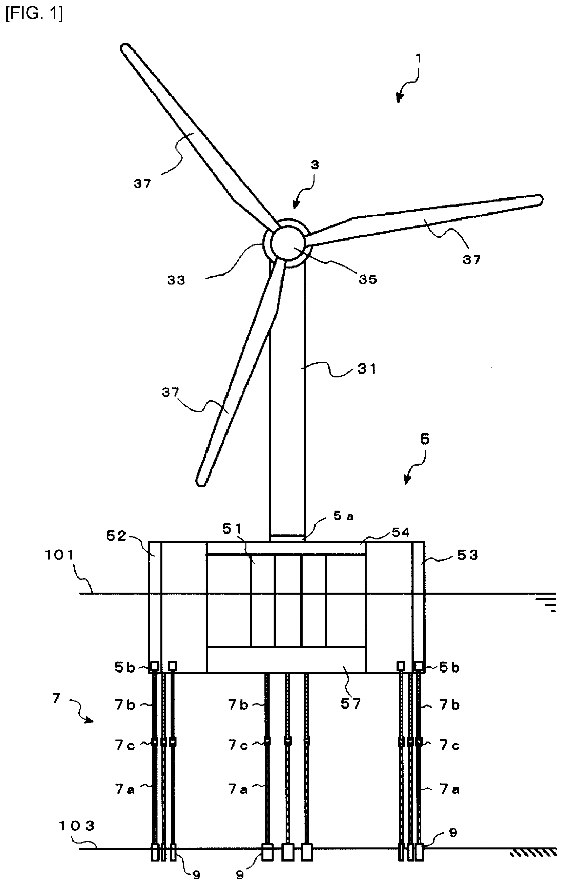

FIG. 1, where (A) is a perspective view of the tension moored floating body from one side, and (B) is a perspective view of the tension moored floating body from another side;

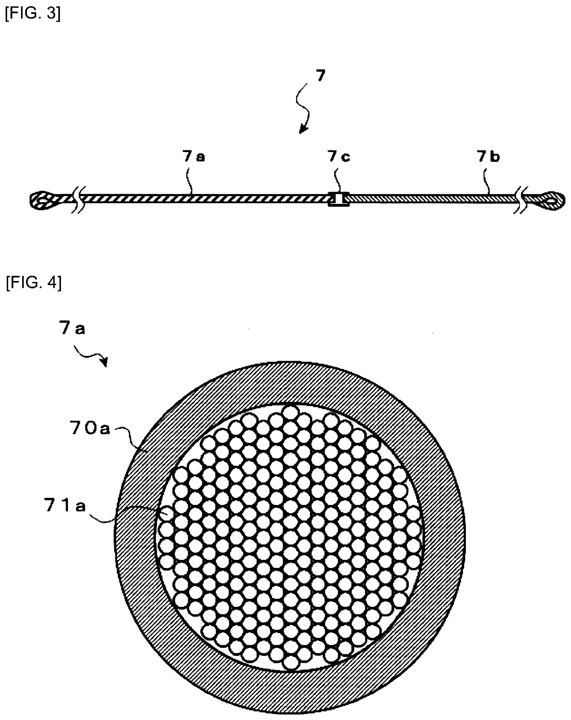

FIG. 3 is a side view of the mooring line for the tension moored floating body in FIG. 1;
FIG. 4 is a cross-sectional view of the mooring line (high rigidity mooring line) for the tension moored floating body in FIG. 1;

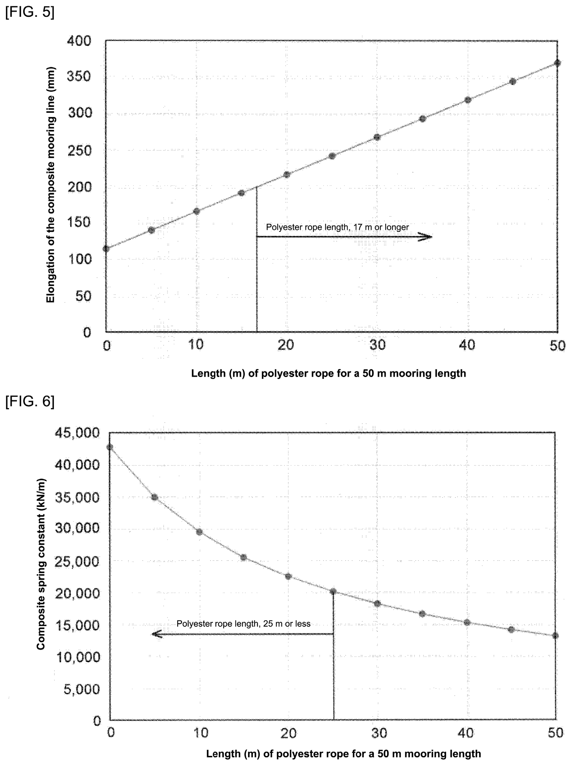

FIG. 5 is a graph depicting the relationship between the length of the low-rigidity mooring line and the combined elongation in the mooring line for the tension moored floating body in FIG. 1; and
FIG. 6 is a graph depicting the relationship between the length of the low-rigidity mooring line and the combined spring constant in the mooring line for the tension moored floating body in FIG. 1.

### DESCRIPTION OF THE PREFERRED EMBODIMENTS

Preferred embodiments of the present invention are described below.

FIG. 1 is a front view depicting offshore wind power generating equipment equipped with a tension moored floating body using a mooring line for a tension moored floating body according to an embodiment of the present invention.
As depicted in FIG. 1, the offshore wind power generating equipment 1 is composed of a wind power generating equipment 3, a tension moored floating body which is a tension leg platform (TLP) 5 (hereinafter sometimes simply referred to as the floating body) on which the wind power generating equipment 3 is mounted, a tension mooring rope 7 with an upper end fixed to the tension moored floating body 5, and a seabed mooring part 9 by which the lower end of the tension mooring line 7 is fixed to the seabed.

The mooring line for a tension moored floating body according to the present embodiment is a tension mooring line 7 that forcibly pulls down the tension moored floating body 5 on which the wind power generating equipment 3 is mounted, causing a portion of the tension moored floating body to be submerged, and holds the tension moored floating body 5 in a fixed position by the tension generated by the buoyancy of the tension moored floating body 5.

### Wind power generating equipment

The wind power generating equipment 3 is power generating equipment that converts wind power into electricity, and as depicted in FIG. 1, includes a tower 31, a nacelle 33, a boss 35, and blades 37. In the present embodiment, the blades 37 and the boss 35 of the wind power generating equipment 3 are rotated by wind power, and the wind power is converted to electrical power by the rotation of the rotor of the generator that is attached to the boss 35 using this rotational force.

The tower 31 is a support column that supports the entire wind power generating equipment 3, and is a columnar structure that extends vertically. The outer shape of the tower 31 is preferably cylindrical or a cone that widens towards the bottom, but is not particularly limited in this manner as long as the tower can be made strong enough to support all of the wind power generating equipment 3. The tower 31 is supported by the lower end being connected to a flange part 5a of a column 51 provided on an upper surface of the portion of the tension moored floating body 5 that is exposed above the sea surface 101.

The nacelle 33 is a hollow structure containing a generator, located at an upper end of the tower 31, and has a spindle shape that is horizontal in the axial direction. The nacelle 33 and the upper end of the tower 31 are connected by a rotating mechanism that allows the nacelle 33 to rotate around a vertical axis. The nacelle 33 can be oriented so that the axial direction of the boss 35 is directed towards the direction of the strongest wind pressure.
The nacelle 33 internally contains a power transfer shaft that transfers the rotational force of the boss 35, a speed increaser (gearbox or the like) connected to the power transfer shaft, a brake to stop the power transfer shaft during an emergency (such as during a typhoon) or during inspection, and a generator with a rotor that is connected to the power transfer shaft.

The boss 35 is a cylindrical member that supports the blades 37 and is coaxially connected to the tip end of the power transfer shaft. The boss 35 is rotatable around a horizontal axis and is located at the horizontal tip end of the nacelle 33.

The blades 37 are the blades of a wind turbine that convert wind power into rotational force, and a plurality of blades are provided protruding radially from the outer circumference of the boss 35. In the present embodiment, three blades 37 are provided protruding from the boss 35 at equal intervals in the circumferential direction. When the blades 37 receive the wind, the blades 37 rotate with the boss 35 around the boss 35. When the boss 35 is rotated, the generator rotor rotates, and electricity is generated.
The electricity generated by the generator is transmitted to land via an underwater power transfer cable (not depicted in the diagram).

### Tension moored floating body

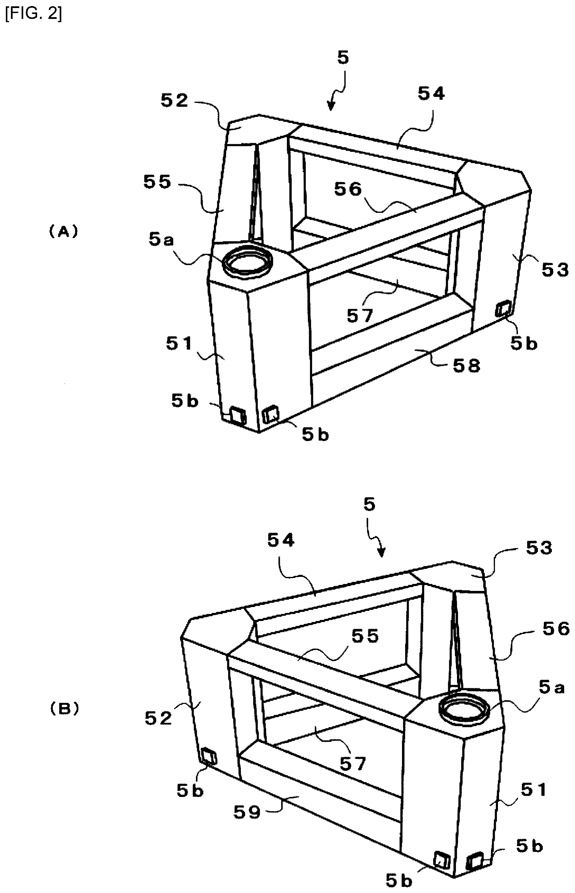

FIG. 2 is a perspective view of the tension moored floating body depicted in FIG. 1, where FIG. 2(A) is a perspective view of the tension moored floating body from one side, and FIG. 2(B) is a perspective view of the tension moored floating body from another side.

The tension moored floating body 5 is a floating body that supports the wind power generating equipment 3. As depicted in FIG. 1, the tension moored floating body 5 is floating on the sea, with the wind power generating equipment 3 mounted on the portion above the sea surface 101. The tension moored floating body 5 has a hollow part sealed inside, so the overall specific gravity is less than 1, allowing the tension moored floating body 5 to float on the sea.

Furthermore, as depicted in FIG. 2, the tension moored floating body 5 is equipped with at least three vertically extending, hollow, columnar columns arranged to form a roughly equilateral triangle when viewed from above. Furthermore, as depicted in FIG. 1 and FIG. 2, column 52 and column 53 are connected above sea level by an upper beam (bracing) 54 and below sea level 101 by a lower beam (pontoon) 57. Similarly, column 51 and column 52 are connected by an upper beam (bracing) 55 and a lower beam (pontoon) 59, and column 51 and column 53 are connected by an upper beam (bracing) 56 and a lower beam (pontoon) 58.
In the depicted example, column 51 is provided with a flange part 5a and is configured to support the wind power generating equipment 3.

In the depicted example, columns 51, 52, and 53 are hexagonal prisms, and are depicted having a deformed hexagonal shape with a portion protruding from the plane. The shape of the column is not limited to this shape, and may be a regular hexagon, a pentagon, or a circle on a plane.

The upper beams 54, 55, 56 are rectangular prisms in the depicted example, but are not limited to this shape, and the upper beams may be cylindrical prisms or formed as a truss structure.

In the present embodiment, the tension moored floating body 5 may be equipped with ballast tanks (not depicted) inside each of the three columns 51, 52, 53. The buoyancy and draft of the tension moored floating body 5 can be adjusted by filling and draining ballast water into a ballast tank. When installing the tension moored floating body 5, reducing the buoyancy facilitates attaching the tension mooring line 7.

Furthermore, FIG. 1 depicts an example in which the tension moored floating body 5 is provided with a total of nine connecting parts 5b, arranged as three sets for each of the three columns 51, 52, 53. The upper end of the tension mooring line 7 is connected to each of these connecting parts 5b. The lower ends of these tension mooring lines 7 are connected to the seabed mooring part 9 on the seabed side, thereby connecting the tension moored floating body 5 to the plurality of seabed mooring parts 9, which are mooring equipment provided on the seabed 103.

As a result, the buoyancy of the tension moored floating body 5 generates tension in the tension mooring line 7, and consequently, the tension moored floating body 5 is held in place. In other words, when the tension moored floating body 5 is submerged in the sea, the buoyant force acting in the opposite direction to gravity (upward) is greater than the gravitational force acting downward, so there is a tendency to rise to a position where the buoyant force and gravity are balanced. This is because buoyancy is generated in proportion to the volume of the portion of the tension moored floating body 5 that is submerged below the sea surface. The tension mooring line 7 holds the tension moored floating body 5 at a depth where the buoyancy of the tension moored floating body 5 is greater than the force of gravity.

In this state, rising of the tension moored floating body 5 is prevented by the tension mooring line 7, so forced buoyancy of the tension moored floating body 5, which is greater than gravity, is applied to the tension mooring line 7. When forced buoyancy is applied to the tension mooring line 7, tension is generated, and a tension mooring state is introduced. In the tensioned mooring state, the tension generated in the tension mooring line 7 holds the tension moored floating body 5 in place.

In the present embodiment, the tension moored floating body 5 is designed so that even if there is a rise or fall in the sea level due to tides (change in seabed depth), tension will be generated within a prescribed range in the tension mooring line 7, and the tension moored state will be maintained.

### Seabed mooring part

In the present embodiment, the seabed mooring part 9 is a top part of a pile foundation driven into the seabed 103. The seabed mooring part 9 is mooring equipment on the seabed 103 that holds the tension moored floating body 5 in a fixed position via the tension mooring line 7. The seabed mooring part 9 is equipped with connecting parts such as hooks and rings for connecting to the lower end of the tension mooring line 7.

The seabed mooring part 9 can also use other known mooring equipment if configured to not detach from the seabed 103 due to the tensile force applied from the tension mooring line 7 when the position of the tension moored floating body 5 is maintained by forced buoyancy, and if also being corrosion resistant so as to not easily corrode in the sea. Specifically, gravity anchors, pile anchors, suction anchors, and the like can also be used. In the present embodiment, the length of the tension mooring line 7 is not adjusted, so any method that can reliably fix the position of the lower end of the tension mooring line 7 is acceptable and is not particularly limited.

In the present embodiment, nine seabed mooring parts 9 are provided for one set of offshore wind power generating equipment 1. The nine seabed mooring parts 9 are arranged in sets of three, in proximity, and are installed on the seabed in the vertical direction of the columns 51, 52, 53 of the tension moored floating body 5, resulting in a total of three sets of seabed mooring parts 9.
In the present embodiment, each of the columns 51, 52, 53 is provided with three connecting parts 5b, the upper end of the tension mooring line 7 is fixed to the connecting part 5b on the tension moored floating body side, and the same number of seabed mooring parts 9 as the number of connecting parts 5b are installed on the seabed vertically from the connecting part 5b. The connecting part 5b and the seabed mooring part 9 are fixed together by a total of three sets of mooring line bundles, each containing three tension mooring lines 7. As a result, the upper end of the tension mooring line 7 is fixed to the connecting part 5b provided on the tension moored floating body 5, and the lower end of the tension mooring line 7 is fixed to the seabed mooring part 9, thereby mooring and holding the tension moored floating body 5.

In the present embodiment, the number of seabed mooring parts 9 and the number of tension mooring lines 7 should be set appropriately within a range that allows the tensile force applied by the tension mooring lines 7 to be distributed to such an extent that the tension moored floating body 5 does not detach from the seabed 103 when held in a fixed position by forced buoyancy. For example, with respect to one set of offshore wind power generating equipment, the tension moored floating body 5 may be moored and held using six seabed mooring parts 9 and six tension mooring lines 7, with each of the three sets of mooring bundles containing two tension mooring lines 7.

### Tension mooring line

The tension mooring line 7 is a mooring line that connects the tension moored floating body 5 and the seabed mooring part 9. The tension generated by the buoyancy of the tension moored floating body 5 maintains the tension moored floating body 5 in a tension moored state and maintains the tension moored floating body 5 in a fixed position.

FIG. 3 is a side view of the mooring line for the tension moored floating body in FIG. 1.
As depicted in FIG. 3, the tension mooring line 7 of the present embodiment contains a high rigidity mooring line 7a made of a material with high tensile rigidity and a low rigidity mooring line 7b made of a material with low tensile rigidity, connected in series by a connector 7c. The connector 7c is a device for connecting the upper end of the high rigidity mooring line 7a and the lower end of the low rigidity mooring line 7b, and various types of connectors can be used, such as hook-shaped and ring-shaped, and the configuration is not particularly limited. The tension mooring line 7 has sufficient strength to withstand the tension generated by the buoyancy of the tension moored floating body 5 without yielding or breaking, and also possesses corrosion resistance to inhibit corrosion in the sea.

FIG. 4 is a cross-sectional view of the mooring line (high rigidity mooring line) for the tension moored floating body in FIG. 1. In the present embodiment, the high rigidity mooring line 7a is a steel wire cable, as depicted in FIG. 4. The steel wire cable contains a plurality of strands (galvanized steel wire) 71a arranged in parallel, with the outer circumference of these strands covered by a protective layer 70a. In the present embodiment, the high rigidity mooring line 7a has, for example, about 200 to 400 strands and a covered diameter of, for example, about 100 mm to 200 mm.
In the present embodiment, the illustrated example depicts a plurality of strands bundled in parallel, but the configuration is not limited to this case, and the plurality of strands do not need to be bundled in parallel so long as the strands are bundled together.

The low rigidity mooring line 7b is preferably a resin rope. The material used for the resin rope may be polyamide, polyester, or the like. Examples of polyamides include nylon 6, nylon 66, nylon 11, and nylon 12. Polyester rope is preferred as the resin rope. A polyester rope can be exemplified by bundling a plurality of sub-ropes in parallel, each containing strands (for example, polyester yarn strands) twisted together, wrapping the bundles with a sand filter, and then covering the outside with a protective layer. The protective layer can be made from woven or knitted polyester strands.
In the present embodiment, the low rigidity mooring line 7b has a diameter of, for example, about 280 mm.

In the present embodiment, for the example depicted in FIG. 1, the low rigidity mooring line 7b is attached to the connecting part 5b on the floating body side, and the high rigidity mooring line 7a is attached to the seabed mooring part 9 on the seabed side. However, the low rigidity mooring line 7b may be attached to the seabed mooring part 9 on the seabed side, and the high rigidity mooring line 7a may be attached to the connecting part 5b on the floating body side.

The tension mooring line 7 can provide both relaxation of the length accuracy requirements during installation and avoidance of resonance in the tension moored floating body 5.
The length accuracy requirement during installation refers to the acceptable range of error in length, and therefore, a relaxation of the accuracy requirement indicates that the acceptable range of error is wider. As described above, for one set of three tension mooring lines 7, the tension must be generated evenly in each tension mooring line 7. If there is a large error in the length of each tension mooring line 7, the longer tension mooring lines 7 will either have no tension or only weak tension, while the shorter tension mooring lines 7 will have excessively high tension. This leads to uneven loading in each tension mooring line 7, potentially damaging the shorter tension mooring lines 7 or the supporting structure, and also creates durability problems.
In the tension mooring line 7 of the present embodiment, if the length error is within an acceptable range, the low rigidity mooring line 7b of the shorter tension mooring line 7 will stretch, so tension will be generated in the longer tension mooring line 7 as well, and excessive tension will not be generated in the shorter tension mooring line 7.

As described above, the resonance of the tension moored floating body 5 is caused in the vertical direction by vibrations due to the rated rotational speed of the wind turbine, and in the roll-pitch direction by the wave period. Resonance with the wave period may occur when the spring constant k of the tension mooring line 7 is small and the natural frequency F₀ (Hz) of the system in the roll and pitch directions is low. Resonance can also occur in the vertical direction.
In the present embodiment, a large wind turbine (10 MW or more) may be supported by a TLP. In this case, resonance between the vertical direction and the wind turbine rotation period, and resonance between the roll-pitch direction and the wave period become issues.
In the present embodiment, the tension mooring line 7 is a hybrid mooring line containing a low rigidity mooring line and a high rigidity mooring line, where the low rigidity mooring line 7b and the high rigidity mooring line 7a are connected by a connector 7c, regardless of the rotational period that is dependent on the specifications of the wind turbine to be installed. Therefore, the tensile rigidity can be arbitrarily changed, and the axial rigidity of the mooring line in the axial direction, which is proportional to the tensile rigidity, can also be arbitrarily changed, thereby changing the natural period and, as a result, resonance can be avoided. For example, wave periods of 4 to 5 seconds or longer, up to about 20 seconds, occur frequently, and the natural period must be shifted from these frequently occurring wave periods. As described above, the tension mooring line of the present invention is a hybrid mooring line, and the natural period can be changed as a result of being able to arbitrarily change the rigidity. As a result, the natural period in the roll-pitch direction can be kept to a period of 4 seconds or less, thus preventing resonance with the wave period.

Table 1 below depicts the steady tension (4900 kN (500 tons)), total length (50 m), tensile rigidity of the polyester rope (low rigidity mooring line 7b) (661,500 kN), and tensile rigidity of the steel wire cable (high rigidity mooring line 7a) (2,142,000 kN) per line of the tension mooring line 7 of the present embodiment. Note that tensile rigidity is the product of the Young's modulus (elastic modulus) and the cross-sectional area of the line material. Table 1 depicts an example where the high rigidity mooring line 7a has more than three times the tensile rigidity of the low rigidity mooring line 7b.
In the tension mooring line 7 of the present invention, the tensile rigidity of the high rigidity mooring line 7a is preferably in a range of 2 to 5 times the tensile rigidity of the low rigidity mooring line 7b, which is set to 1. By forming a tension mooring line 7 within this range, both a relaxation of installation accuracy requirements and avoidance of resonance caused by wave period and wind turbine vibrations can be achieved.

**[Table 1]**

| Mooring conditions for tension mooring lines and tensile rigidity of each material | |
|---|---|
| Steady-state tension acting on each mooring line | 4900 kN |
| Total length of mooring line | 50 m |
| Polyester rope tensile rigidity (Low rigidity mooring line 7b) | 661500 kN |
| Tensile rigidity of steel wire cable (High rigidity mooring line 7a) | 2142000 kN |

As described above, the ratio of the tensile rigidity between the low rigidity mooring line 7b and the high rigidity mooring line 7a in the tension mooring line 7 allows for both relaxation of installation accuracy requirements and avoidance of resonance due to wave period and wind turbine vibration. However, the ratio of the lengths of the low rigidity mooring line 7b and the high rigidity mooring line 7a in the tension mooring line 7 can also achieve both relaxation of construction and installation accuracy requirements and avoidance of resonance with the wave period. Embodiments based on the ratio of the lengths of the low rigidity mooring line 7b and the high rigidity mooring line 7a are described below.

FIG. 5 is a graph depicting the relationship between the length of the low-rigidity mooring line and the combined elongation in the mooring line for the tension moored floating body in FIG. 1. The relationships depicted in FIG. 5 and FIG. 6 represent cases using the low rigidity mooring lines 7b and the high rigidity mooring lines 7a presented in Table 1.
As depicted in FIG. 5, the horizontal axis represents the length of the low rigidity mooring line (polyester rope) 7b relative to a total length of 50 m, and the elongation of the tension mooring line 7 when an axial force of 4900 kN is applied is depicted for the case where the low rigidity mooring line 7b and the high rigidity mooring line 7a are connected. Note that the low rigidity mooring line 7b on the left end being 0 m indicates that the whole mooring line is the high rigidity mooring line 7a, and conversely, a length of 50 m on the right end indicates that the whole mooring line is the low rigidity mooring line 7b. As depicted in FIG. 5, a larger proportion of low rigidity mooring line 7b leads to increased linear elongation of the tension mooring line 7. For example, as depicted in the figure, if the total length of the tension mooring line is 50 m and an elongation of 200 mm or more is required in the tension mooring line 7 to relax the construction and installation accuracy requirements, the length of the low rigidity mooring line 7b can be set to 17 m or more in order to achieve the required relaxation of construction and installation accuracy requirements.

FIG. 6 is a graph depicting the relationship between the length of the low-rigidity mooring line and the combined spring constant in the mooring line for the tension moored floating body in FIG. 1.
As depicted in FIG. 6, the length of the low rigidity mooring line (polyester rope) 7b is plotted on the horizontal axis, and the result of the combined spring constant is depicted for the case where the low rigidity mooring line 7b and the high rigidity mooring line 7a are connected.
As depicted in FIG. 6, a smaller proportion of low rigidity mooring line 7b and a larger proportion of high rigidity mooring line 7a leads to the combined spring constant increasing nonlinearly. For example, as depicted in the figure, if a spring constant of 20000 kN/m or more is required for the tension moored floating body 5 to avoid resonance between the wave period and the roll-pitch motion on the sea, the length of the low rigidity mooring line 7b can be set to 25 m or less to avoid resonance between the wave period and the roll-pitch motion.

As described above, both a relaxation of installation accuracy requirements and avoidance of resonance in the tension moored floating body 5 can be achieved by examining the elongation and spring constant of the tension mooring line 7 and setting the length of the low rigidity mooring line 7b to a range of 17 m to 25 m (34% to 50%), when the total length of the tension mooring line 7 is 50 m.

In the present embodiment, the natural frequency F₀ (Hz) of the tension moored floating body 5 decreases as the water depth increases and the total length of the tension mooring line 7 increases. In this case, the proportion of high rigidity mooring line 7a may be increased when the total length of the tension mooring line 7 is 50 m in order to avoid resonance with the wave period at sea. In the present embodiment, the requirement for construction and installation accuracy due to the increased proportion of high rigidity mooring line 7a can be relaxed even if the proportion of high rigidity mooring lines 7a is increased, since the high rigidity mooring line 7a also stretches in proportion to the total length.

As described above, deeper water and longer total length of the tension mooring line 7 leads to a shorter preferred length (and lower proportion) of the low rigidity mooring line 7b. Therefore, the length of the high rigidity mooring line can be increased (and the proportion can be increased) as the water depth increases, thus allowing the length of the low rigidity mooring line to be shortened. In the present embodiment, if the total length of the tension mooring line 7 is longer than 50 m, the length of the high rigidity mooring line 7a is preferably 50% or more of the total length of the tension mooring line 7.

On the other hand, the embodiments depicted in FIG. 5 and FIG. 6 depict the ratio of high rigidity mooring line 7a to low rigidity mooring line 7b in the tension mooring line 7 when the water depth (distance from the seabed mooring part to the connecting part of the floating body) is approximately 50 m. However, when the water depth is shallower, the proportion of high rigidity mooring line 7a can be reduced and the proportion of low rigidity mooring line 7b can be increased.

Although the present invention has been described above with reference to embodiments, the present invention is not limited to these embodiments. A person of ordinary skill in the art will naturally conceive of various modifications and improvements within the scope of the technical concept of the present invention, and these modifications are also included in the present invention.

### DESCRIPTION OF CODES

1. Offshore wind power generating equipment 3. Wind power generating equipment
31. Tower
33. Nacelle
35. Boss
37. Blade
5. Tension moored floating body
5a. Flange part
5b. Connecting part
51, 52, 53. Column
54, 55, 56. Beam
57, 58, 59: Pontoon
7. Tension mooring line
7a. High rigidity mooring line
70a. Protective layer
71a. Wire
7b. Low rigidity mooring line
7c. Connector
9. Seabed mooring part
101. Water level
103. Seabed

## Claims

1. A mooring line for a tension moored floating body that connects between a connecting part formed on a tension moored floating body supporting a wind power generating equipment offshore and a seabed mooring part fixed to the seabed, wherein
the connecting part and the seabed mooring part are connected by the tension mooring line, and the buoyancy generated in the tension moored floating body generates tension in the tension mooring line, thereby enabling the tension moored floating body to be held in a tension moored state;
the tension mooring line is connected via a connector between a low rigidity mooring line which has low tensile rigidity, calculated by multiplying the Young's modulus of elasticity of the line material by the cross-sectional area, and a high rigidity mooring line, which has higher tensile rigidity than the low rigidity mooring line;
the line material of the low rigidity mooring line is a resin rope, and the line material of the high rigidity mooring line is a steel wire cable composed of a plurality of bundles of steel strands; and
the tension mooring line is configured such that, when the tensile rigidity of the resin rope is set to 1, the tensile rigidity of the steel wire cable is 2 to 5 times the tensile rigidity of the resin rope.

2. A mooring line for a tension moored floating body that connects between a connecting part formed on a tension moored floating body supporting a wind power generating equipment offshore and a seabed mooring part fixed to the seabed, wherein
the connecting part and the seabed mooring part are connected by the tension mooring line, and the buoyancy generated in the tension moored floating body generates tension in the tension mooring line, thereby enabling the tension moored floating body to be held in a tension moored state;
the tension mooring line is connected via a connector between a low rigidity mooring line which has low tensile rigidity, and a high rigidity mooring line, which has higher tensile rigidity than the low rigidity mooring line;
the low rigidity mooring line is a resin rope, and the high rigidity mooring line is a steel wire cable composed of a plurality of bundles of parallel steel strands; and
50% or more of the total length of the tension mooring line is made of the high rigidity mooring line.

3. The mooring line for a tension moored floating body according to claim 1 or claim 2, wherein the resin rope is a polyester rope formed by preparing a plurality of sub-ropes made by twisting a plurality of polyester strands together, and bundling the plurality of sub-ropes in parallel.

4. The mooring line for a tension moored floating body according to Claim 1 or 2, wherein the tension moored floating body contains at least three vertically extending hollow columnar columns arranged in a triangular shape on a plane, and each of the three columns is connected by three upper beams above the sea surface and three lower beams below the sea surface, wherein the wind power generating equipment is supported on one of the columns.
